# EUROPÄISCHE PATENTANMELDUNG

(11) **EP 2 677 195 A2**
(43) Veröffentlichungstag der Anmeldung: **25.12.2013**
(21) Anmeldenummer: 13168465.6
(22) Anmeldetag: 21.05.2013
(51) Int. Cl.: F16F 9/46

(54) **Verstellbare Dämpfventileinrichtung**

(30) Priorität: 21.06.2012 DE 102012210460
(71) Anmelder: ZF Friedrichshafen AG, 88038 Friedrichshafen (DE)
(72) Erfinder: Förster, Andreas, 97422 Schweinfurt (DE)

(57) **Zusammenfassung**

Verstellbare Dämpfventileinrichtung (1) für einen Schwingungsdämpfer, umfassend einen Aktuator (15), der auf einen mehrteiligen Vorstufenventilkörper (21) eines Vorstufenventils (23) eine Betätigungskraft ausübt, wobei das Vorstufenventil (23) über einen relativ zu einem aktuatorseitigen Schaftabschnitt (83) auf einen axial beweglichen Vorstufenventilschließkörper (32) eine Schließkraft auf ein Hauptstufenventil (37) beeinflusst, indem es das Druckniveau in einem Steuerraum (57) der Dämpfventileinrichtung (1) bestimmt, wobei ein Hauptstufenventilkörper (35) des Hauptstufenventils (37) bei einer Abhubbewegung einen Rückraum (59) komprimiert, der über das Vorstufenventil (23) mit dem Steuerraum (57) verbunden ist, wobei eine Vorstufenventilschließfeder (30) den Vorstufenventilschließkörper (32) unabhängig von der Aktuatoransteuerung in Schließrichtung beaufschlägt und der Rückraum (59) einen Abflusskanal (63) aufweist, der ein Dämpfventil (81) aufweist, das bei einer Abhubbewegung des Hauptstufenventilkörpers (35) und abgeschlossenem Rückraum (59) eine Dämpfkraft erzeugt.

## Beschreibung

Die Erfindung betrifft eine verstellbare Dämpfventileinrichtung gemäß dem Oberbegriff von Patentanspruch 1.

Die DE 10 2009 016 464 B3 zeigt eine verstellbare Dämpfventileinrichtung mit Vorstufenventil, das einen zweiteiligen Vorstufenventilkörper aufweist. Auf einem zentralen Träger ist ein Anker eines elektromagnetischen Aktuators fixiert. Stirnseitig liegt ein Ventilsitzkörper an, der einen Strömungsquerschnitt eines Steuerraums ansteuert. Über die Größe des Strömungsquerschnitts wird der Druck auf druckbeaufschlagte Flächen am Hauptstufenventilkörper eingestellt, um die Schließkräfte zu bestimmen.

Die verstellbare Dämpfventileinrichtung in dieser besonderen Anordnung außerhalb der Arbeitsräume wird unabhängig von der Bewegungsrichtung der Kolbenstange stets nur aus einer Richtung angeströmt und das Dämpfmedium strömt in den Ausgleichsraum ab.

Die Dämpfventileinrichtung kann jedoch auch an der Kolbenstange angeordnet sein, wobei sie dann in zwei Richtungen durchströmt wird. Insbesondere bei dieser Variante kann bei längerem stromlosen Zustand des Aktuators der Fall, z. B. bei einem Ausfall der Energieversorgung, eintreten, dass das Hauptstufenventil permanent in einem Maße geöffnet ist, wie es für die Fahrsicherheit nicht aktzeptabel ist.

Die Aufgabe der vorliegenden Erfindung besteht darin, das Problem des undefiniert geöffneten Hauptstufenventils bei Ausfall der Energieversorgung zu beheben.

Erfindungsgemäß wird die Aufgabe dadurch gelöst, dass eine Vorstufenventilschließfeder den Vorstufenventilschließkörper unabhängig von der Aktuatoransteuerung in Schließrichtung beaufschlägt und der Rückraum einen Abflusskanal aufweist, der ein Dämpfventil aufweist, das bei einer Abhubbewegung des Hauptstufenventilkörpers und abgeschlossenem Rückraum eine Dämpfkraft erzeugt.

Die Feder kann mit einer vergleichsweise geringen Schließkraft ausgeführt sein, um möglichst gering den normalen Arbeitszustand der Dämpfventileinrichtung zu beeinflussen. Ein weiterer Vorteil der Erfindung besteht darin, dass die Maßnahme sehr einfach umsetzbar ist.

Das Dämpfventil führt zu einer gedämpften und definierten Öffnungsbewegung des Hauptstufenventils. Prinzipiell würde das Hauptstufenventil auch ohne Dämpfventil eine Öffnungsbewegung ausführen können, da geringe Spalten zwischen den bewegten Bauteilen eine Leckage zulassen würden. Diese Leckagen wären jedoch undefiniert.

Im Hinblick auf eine optimale Bauraumausnutzung ist der Abflusskanal im Hauptstufenventil ausgeführt. Der Vorteil besteht darin, dass man keine Änderungen am Gehäuse der Dämpfventileinrichtung vornehmen muss.

Gemäß einem vorteilhaften Unteranspruch weist das Vorstufenventil für zwei getrennte Anströmflächen des Hauptstufenventils zwei getrennte Strömungsverbindungsabschnitte zum Steuerraum auf, wobei ein Rückschlagventil den Dämpfmediumeintritt von den Strömungsverbindungsabschnitten in den Steuerraum steuert.

Auch die Strömungsabschnitte sind im Hauptstufenventilkörper ausgeführt. Eine Strömungsverbindung dient als Abflusskanal für den Rückraum. Die Anordnung des Dämpfventils im Hauptstufenventilkörper bietet die Möglichkeit, die Einstellung des Dämpfventils unabhängig von der Dämpfventileinrichtung zu prüfen.

Um die Herstellung der Strömungswege innerhalb des Hauptstufenventils zu vereinfachen, ist der Hauptstufenventilkörper mehrteilig ausgeführt und in einer Teilungsfuge ist ein Strömungsabschnitt zwischen dem Hauptstufenventil und dem Vorstufenventil ausgeführt.

Des Weiteren ist vorgesehen, dass ein Spannbolzen des Hauptstufenventilkörpers mindestens eine Ventilscheibe des Dämpfventils zumindest mittelbar in Schließrichtung vorspannt.

Bevorzugt ist der Spannbolzen als ein zum Hauptstufenventilköper separates Bauteil ausgeführt. Dadurch vereinfacht sich die Herstellung der Strömungswege innerhalb des Hauptstufenventilkörpers.

Um den Bauraumbedarf für das Dämpfventil zu minimieren, ist mindestens eine Ventilscheibe des Dämpfventils elastisch ausgeführt. Eine separate Schließfeder ist deshalb für das Dämpfventil nicht notwendig.

Die Vorstufenventilschließfeder stützt sich an einem Ventilkörper eines Notbetriebventils der Dämpfventileinrichtung ab. Der große Vorteil besteht darin, dass im Normalbetrieb eine geringere Federvorspannung vorliegt als im Notbetrieb. Dadurch kann der Einfluss der Vorstufenventilschließfeder auf den Normalbetrieb minimiert werden.

Alternativ kann die Vorstufenventilschließfeder räumlich zwischen dem Schaftabschnitt und dem Vorstufenventilsitzkörper angeordnet sein. Diese Variante benötigt nur einen geringen Bauraum.

Anhand der folgenden Figurenbeschreibung soll die Erfindung näher erläutert werden.
Fig.1 Verstellbare Dämpfventileinrichtung an einer Kolbenstange
Fig. 2 Vorstufenventilkörper als Einzelteil
Fig. 3 Alternativvariante zum Vorstufenventil gemäß Fig. 2

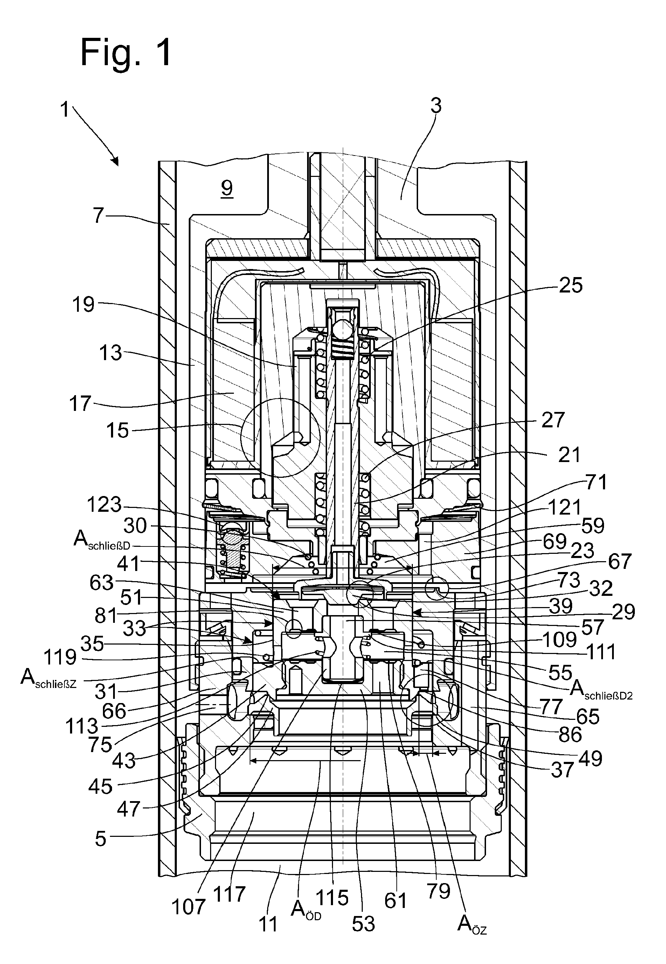

Die Figur 1 zeigt eine Dämpfventileinrichtung 1, die z. B. an einer Kolbenstange 3 eines nur ausschnittweise dargestellten Schwingungsdämpfers befestigt ist. Die Dämpfventileinrichtung 1 umfasst einen Kolben 5, der einen Zylinder 7 in einen kolbenstangenseitigen und einen kolbenstangenfernen Arbeitsraum 9; 11 unterteilt, die beide mit Dämpfmedium gefüllt sind. In diesem Ausführungsbeispiel ist die Dämpfventileinrichtung an der Kolbenstange 3 befestigt, jedoch ist die Erfindung nicht auf eine derartige Anordnung eingeschränkt.

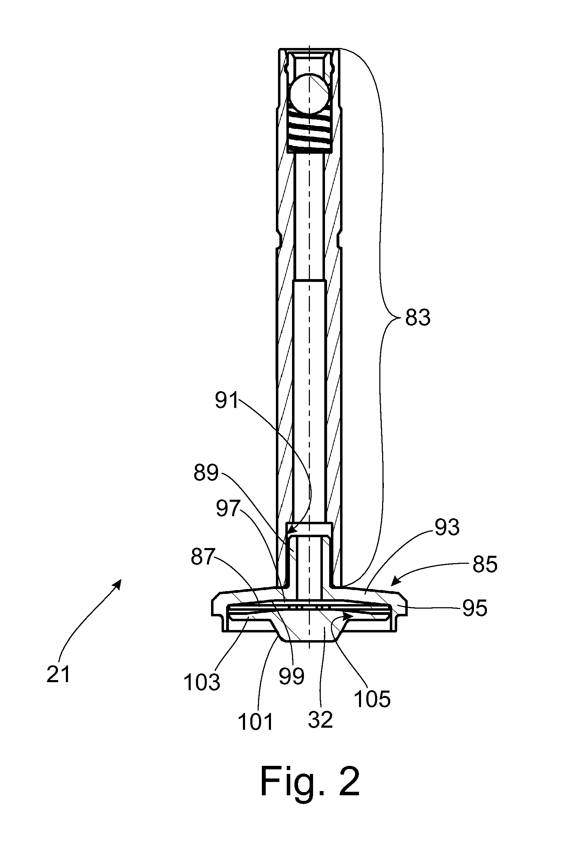

In einem äußeren Gehäuse 13 ist ein Aktuator 15 beliebiger Bauform angeordnet, wobei in diesem Beispiel als Aktuator eine Magnetspule 17 dient, die auf einen axial beweglichen Anker 19 eine Kraft ausübt, die auf einen mehrteiligen Vorstufenventilkörper 21 eines Vorstufenventils 23 übertragen wird. Der konstruktive Aufbau des Vorstufenventilkörpers wird im Zusammenhang mit der Fig. 2 im Detail beschrieben. Mindestens eine Ventilfeder, in dieser Variante kommen zwei entgegengesetzt wirksame Ventilfedern 25; 27 zur Anwendung, spannen den Vorstufenventilkörper 21 in Abhubrichtung bezogen auf eine Vorstufenventilfläche 29 des Vorstufenventils 23 vor. Der Aktuator 15 wirkt in Schließrichtung des Vorstufenventils 23. Die Kraft der mindestens einen Ventilfeder 25; 27 und die Kraft des Aktuators 15 bilden eine resultierende Kraft, die auf den Vorstufenventilkörper 21 in Abhubrichtung einwirkt.

Unabhängig von der Aktuatoreinstellung beaufschlägt eine Vorstufenventilschließfeder 30 einen Vorstufenventilsitzkörper 32 in Schließrichtung.

In einem inneren Gehäuse 31 der Dämpfventileinrichtung 1 ist eine Stufenöffnung 33 ausgeführt, in der ein Hauptstufenventilkörper 35 eines Hauptstufenventils 37 eine axiale Bewegung ausführen kann. Der Hauptstufenventilkörper 35 verfügt über eine Führungshülse 39, deren Rückseite 41 eine vom Dämpfmedium druckbeaufschlagte Fläche A_{SchließD} bildet. Des Weiteren weist der Hauptstufenventilkörper 35 einen radialen Absatz 43 auf, der in Richtung der Rückseite 41 eine zusätzliche druckbeaufschlagte Fläche A_{SchließD2} darstellt.

In einer Ruhelage der Kolbenstange 3, das heißt ohne Öffnungskraft, liegt der Hauptstufenventilkörper 35 auf einer Ventilsitzfläche 45 eines axial beweglichen Ventilrings 47 auf, der an seiner in Richtung des kolbenstangenfernen Arbeitsraum 11 weisenden Seite auf einer gehäuseseitigen Ventilsitzfläche 49 aufliegt.

Der Hauptstufenventilkörper 35 ist mehrteilig ausgeführt. Ein äußerer Topf 51 bildet die Führungshülse 39 und den radialen Absatz 43. Eine innere Scheibe 53 begrenzt mit dem Topf 51 in einer Teilungsfuge einen radialen Dämpfmediumströmungsweg 55 zwischen der zusätzlichen druckbeaufschlagten Fläche A_{SchließD2} als Teil des Hauptstufenventils und einem Steuerraum 57 als Teil des Vorstufenventils, dessen Abflussquerschnitt in Richtung eines Rückraums 59 vom Ventilkörper 21 bestimmt wird.

Die zusätzliche Fläche A_{SchließD2} des Hauptstufenventilkörpers 35 ist über mindestens zwei Strömungswege mit Dämpfmedium beaufschlagbar. Ein Zuströmkanal 61 ist direkt im Hauptstufenventilkörper 35 als axiale Durchgangsöffnung ausgeführt. Ein Abflusskanal 63 verläuft innerhalb des Hauptstufenventilkörpers 35 zwischen dem Rückraum 59 des Hauptstufenventils 37 und dem Dämpfmediumströmungsweg 55.

Eine Strömungsanbindung 65 des Rückraums 59 zum kolbenstangenfernen Arbeitsraum 11 innerhalb einer Verbindungshülse 66 zwischen dem äußeren Gehäuse 13 und dem Kolben 5 wird von einem Notbetriebventil 67 gesteuert. Das Notbetriebventil 67 wird von einem Ventilring 69 gebildet, der gegen die Kraft mindestens einer Schließfeder 71 von dem Aktuator 15 von einer Notbetriebventilsitzfläche 73 abgehoben wird. Schon ein geringer Energieeinsatz für den Aktuator 15 genügt, um die Abhubbewegung des Ventilrings 69 zu erreichen. Auch die Vorstufenventilschließfeder 30 stützt sich axial an dem Ventilring 69 ab, so dass bei geöffnetem Notbetriebventil 67 eine geringe Schließkraft der Vorstufenventilschließfeder 30 vorliegt. In diesem Beispiel wirkt die Magnetkraft der Magnetspule 17 auf den Ventilring 69. Durch eine geschickte Bemessung der Federkräfte und der Magnetkräfte kann eine strikte Trennung zwischen einem Notbetriebzustand und einem Normalbetriebzustand erreicht werden. Damit ist der Strömungsweg zwischen dem Rückraum 59 und dem kolbenstangenfernen Arbeitsraum 11 über das Notbetriebventil 67 beeinflussbar.

In der Verbindungshülse 66 der Dämpfventileinrichtung 1 ist mindestens eine Anschlussöffnung 75 ausgeführt, die vom kolbenstangenseitigen Arbeitsraum 9 zur druckbeaufschlagten Fläche A_{ÖZ} an der Unterseite des radialen Absatzes und zum Steuerraum 57 führt. Des Weiteren verfügt der Hauptstufenventilkörper über mindestens eine axiale Öffnung 77 im Bereich des radialen Absatzes 43, die die Anschlussöffnung 75 mit der Fläche A_{ÖZ} verbindet.

Das Vorstufenventil weist mit dem Dämpfmediumströmungsweg 55 und dem Zuströmkanal 61 für zwei getrennte Anströmflächen A_{ÖZ} und A_{ÖD} auch getrennte Strömungsverbindungsabschnitte zum Steuerraum 57 auf. Damit das Dämpfmedium bei einer Anströmung über die Anschlussöffnung 75 nicht durch den Zuströmkanal 61 und den Abflusskanal 63 im Hauptstufenventilkörper 35 in Richtung des kolbenstangenfernen Arbeitsraums 11 entweicht, sind im Zuströmkanal 61 und im Abflusskanal 63 ein Rückschlagventil 79 und ein Dämpfventil 81 mit Rückschlagventilfunktion angeordnet. Dabei ist das Dämpfventil 81 über den Abflusskanal 63 an den Rückraum 59 angeschlossen. Bei einer Abhubbewegung des Hauptstufenventilkörpers und abgeschlossenem Rückraum gibt das Dämpfventil 81 den Strömungsweg bei einem Dämpfmediumstrom aus dem Rückraum 59 in Richtung der zusätzlichen Fläche A_{SchließD2} in Verbindung mit einer Dämpfkraft frei.

Die Figur 2 beschränkt sich auf einen Ausschnitt aus der Fig. 1. Der Vorstufenventilkörper 21 umfasst einen Schaftabschnitt 83, der eine Presspassung mit dem Anker 19 bildet. Der Schaftabschnitt 83 ist als Hohlkörper ausgeführt, um eine Rückseite des Ankers 19 mit Dämpfmedium zwecks hydraulischen Druckausgleichs zu versorgen.

Dem Schaftabschnitt 83 schließt sich ein Federhalter 85 an, der ein Federelement 87 trägt, an. Der Federhalter 85 weist in Richtung des Schaftabschnitts 83 einen Führungszapfen 89 auf, der mit einer Führungsfläche 91 des Schaftabschnitts 83 eine radiale Formschlussverbindung eingeht.

Der Führungszapfen 89 trägt einen Befestigungsflansch 93 für das Federelement 87, wobei das Federelement 87, das als eine Scheibenfeder ausgeführt ist, zusammen mit dem Vorstufenventilsitzkörper 32 von einer radialen Wandung 95 als Teil des Befestigungsflansches 93 zentriert wird. Das Federelement 87 beaufschlägt zwei Abschnitte des Vorstufenventilkörpers 21 auf Abstand, nämlich den Vorstufenventilsitzkörper 32 und den Schaftabschnitt 83. Der Federhalter 85 liegt nach der Endmontage der Dämpfventileinrichtung 1 axial spielfrei an dem Schaftabschnitt 83 an.

Zur Aufnahme eines Federwegs des Federelements 87 weist der Federhalter 85 einen Freiraum 97 auf. Dazu ist der Befestigungsflansch 93 mit einem Konus ausgeführt. Die Scheibenfeder 87 stützt sich mit ihrem Außendurchmesser an dem Konus ab. Der Konus bildet eine Stützfläche 99 zur Begrenzung der Verformung des Federelements 87.

Die Wandung 95 des Befestigungsflansches 93 ist axial etwas länger ausgeführt als die Bauhöhe der Scheibenfeder 87 und des Vorstufenventilsitzkörpers 32. Ein überstehender Teil dient für eine Formschlussverbindung, so dass der Federhalter 85, das Federelement 87 und der Vorstufenventilsitzkörper 32 eine Baueinheit bilden.

Der Vorstufenventilsitzkörper 32 ist als Massivbauteil ausgeführt und verfügt über einen Verschlussbereich 101, der in den Steuerraum 57 (Fig. 1) ragt. Es schließt sich ein Scheibenkörper 103 an, der sich bis zur Wandung 95 des Federhalters 85 radial erstreckt. Auf der in Richtung des Federhalters 85 weisenden Deckseite des Vorstufenventilsitzkörpers 32 ist eine zentrale Anlagefläche für das Federelement 87 ausgeführt. Nach radial außen schließt sich ein konischer Übergang 105 an, der ebenfalls den Verformungsweg der Scheibenfeder 95 aufnimmt.

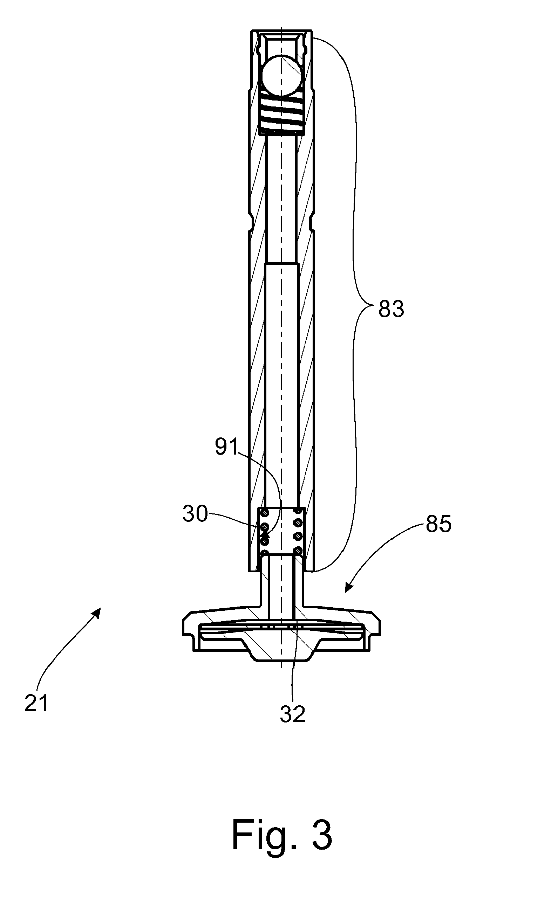

Mit der Fig. 3 soll verdeutlicht werden, dass die Vorstufenventilschließfeder 30 auch zwischen dem Schaftabschnitt 83 und dem Vorstufenventilsitzkörper 32 angeordnet sein kann. In diesem Fall ist die Vorstufenventilschließfeder zwischen dem Federhalter 85 und dem Schaftabschnitt angeordnet. Ein seitliches Auswandern der Vorstufenventilsitzfläche wird von der Führungsfläche 91 verhindert.

Des Weiteren zeigt die Fig. 1, dass ein Spannbolzen 107 des Hauptstufenventilkörpers 35 mindestens eine Ventilscheibe 109 des Dämpfventils 81 zumindest mittelbar in Schließrichtung vorspannt. An dem Spannbolzen 107 ist ein umlaufender Bund 111 ausgeführt, der mindestens eine elastische Ventilscheibe 109 des Dämpfventils 81 auf eine Ventilsitzfläche vorspannt. Die Vorspannung einer Rückschlagventilfeder 113 ist von der Vorspannung der elastischen Ventilscheibe 109 unabhängig. Der Spannbolzen 107 kann durch eine Presspassung im Hauptstufenventilkörper 35 gesichert sein, wobei die Tragkraft der Presspassung deutlich größer ist, als die Vorspannkraft auf das Dämpfventil 81. Alternativ kann axial zwischen dem Spannbolzen 107 und der inneren Scheibe 53 des Hauptstufenventilköpers 35 eine Vorspannfeder 115 angeordnet sein, deren Vorspannkraft ebenfalls größer ist als die notwendige Vorspannkraft auf das Dämpfventil 81.

Es sind vier grundlegende Betriebszustände zu betrachten, die anhand der Fig. 1 erläutert werden. Ein erster Betriebszustand der Dämpfventileinrichtung 1 ist gekennzeichnet durch eine Anströmung ausgehend vom kolbenstangenfernen Arbeitsraum 11 über eine Durchgangsöffnung 117 auf den Ventilring 47 und den Hauptstufenventilkörper 35. Das Notbetriebventil 67 ist eingeschaltet, d. h. wie in der dargestellten Position von seiner Notbetriebventilsitzfläche 73 abgehoben und der Aktuator 15 wirkt der Kraft der Ventilfeder 25; 27 entgegen. Die Vorspannung der Vorstufenventilschließfeder nimmt die minimalste Größe ein, so dass die Ventilschließfeder praktisch keinen Einfluss auf die Normalbetriebfunktion der Dämpfventileinrichtung ausübt. Das Dämpfmedium gelangt über den ersten Zuströmkanal 61 im Ventilkörper 35 und das geöffnete Rückschlagventil 79 und weiter durch den Dämpfmediumströmungsweg 55 zur zusätzlichen Ventilschließfläche A_{SchließD2}. Der Druck auf diese Ventilschließfläche A_{SchließD2} übt eine erste Schließkraftkomponente aus. Des Weiteren gelangt Dämpfmedium durch die Strömungsanbindung 65 in der Verbindungshülse 66 und durch das geöffnete Notbetriebventil 67 in den Rückraum 59. Das Dämpfventil 81 zur zusätzlichen druckbeaufschlagten Fläche A_{SchließD} ist aufgrund der Anströmung durch den Zuströmkanal 61 geschlossen. Wie bereits beschrieben stellt die Rückseite 41 des Hauptstufenventilkörpers 35 die druckbeaufschlagte Fläche A_{SchließD} dar. Die auf den Hauptstufenventilkörper 35 wirksame Schließkraft setzt sich aus der resultierenden Schließkraft, die über den Vorventilkörper direkt auf die Rückseite 41 des Hauptstufenventilkörpers 35 einwirkt und den Druckkräfte auf den Flächen A_{SchließD} und A_{SchließD2} zusammen. Aufgrund der vergleichsweise geringen Drosselverluste sind die Druckniveaus an den Flächen A_{SchließD} und A_{SchließD2} ähnlich wie im kolbenstangenfernen Arbeitsraum, u. a. deshalb, weil der Dämpfmediumströmungsweg zur zusätzlichen Fläche A_{SchließD2} in Strömungsrichtung bezogen auf die zusätzliche Fläche A_{SchließD2} eine Abflussdrossel 86 aufweist. Eine Fläche A_{ÖD} am Ventilring 47 ist geringfügig größer, als die Summe der Flächen A_{SchließD} und A_{SchließD2},so dass eine Blockierung der Abhubbewegung des Hauptstufenventilkörpers 35 aufgrund der Druckverhältnisse ausgeschlossen ist. Der Druck im Steuerraum 57 des Hauptstufenventilkörpers spielt bei dieser Anströmungsrichtung der Dämpfventileinrichtung keine Rolle, da das Vorstufenventil durch die Strömungsanbindung 65 zum Rückraum 59 überbrückt ist.

Insbesondere bei minimaler Bestromung des Aktuators 15 und einer Anströmung des Hauptstufenventilkörpers 35 kann sich der Vorstufenventilsitzkörper 32 gegen die geringe Schließkraft des Federelements 87 geringfügig zum Schaftabschnitt 83 schnell bewegen. Der Hauptstufenventilkörper 35 kann dieser Bewegung folgen und eine Durchlassöffnung einnehmen. Für diese Anfangsbewegung des Hauptstufenventilkörpers 35 wirkt sich dann die Massenträgheit des Ankers 19 nicht aus, da das Federelement 87 zu dem Anker 19 in einer Reihenschaltung fungiert. Wenn die Relativbewegung des Vorstufenventilsitzkörpers 32 zum Schaftabschnitt 83 bestimmungsgemäß abgeschlossen ist, dann liegt das Federelement 87 an dem Federhalter 85 an.

Ein zweiter Betriebszustand beschreibt den Notbetriebzustand der Dämpfventileinrichtung 1 und einer Anströmung der Dämpfventileinrichtung 1 ausgehend von der Durchgangsöffnung 117. Das Notbetriebventil 67 ist aufgrund fehlender Energiezufuhr über den Aktuator 15 geschlossen. Ein Vorstufenventilsitzkörper 32 als Teil des Vorstufenventilkörpers 21 ist axial geringfügig innerhalb des Vorventilkörpers 21 verschieblich geführt. Im stromlosen Zustand der Magnetspule 17 halten die Ventilfedern 25; 27 den Schaftabschnitt 83 des Vorstufenventilkörper 21 statisch betrachtet, d. h. ohne hydraulische Anströmung, in einem maximalen Abstand zur Vorstufenventilsitzfläche 29 oder so, dass der Vorstufenventilsitzkörper 32 mit einer definierten Vorspannung auf der Vorstufenventilsitzfläche 29 aufliegt. Der Vorstufenventilsitzkörper 32 könnte deshalb schon bei der geringsten Druckbeaufschlagung ausgehend vom Steuerraum 57 eine maximale Abhubposition einnehmen. Bei geschlossenem Notbetriebventil ist die Vorspannung der Vorstufenventilschließfeder 30 jedoch maximiert. Unabhängig von der Dimensionierung der Ventilfeder 25; 27 bewegt die Vorstufenventilschließfeder 30 den Vorstufenventilsitzkörper 32 in eine Schließposition auf die Vorstufenventilfläche 29. Dadurch ist der Rückraum 59 von jeglicher Anströmung über den Steuerraum 57 und die Strömungsanbindung 65 abgeschlossen. Das Dämpfmedium gelangt wie im Normalbetriebzustand über den Zuströmkanal 61 im Hauptstufenventilkörper 35 und das geöffnete Rückschlagventil 79 zu der zusätzlichen druckbeaufschlagten Fläche A_{SchließD2} . Damit der Hauptstufenventilkörper 35 zusammen mit dem Ventilring 47 von der gehäuseseitigen Ventilsitzfläche 49 abheben kann, öffnet das Dämpfventil 81 im Hauptstufenventilkörper 35, so dass aus dem Rückraum 59 verdrängtes Dämpfmedium über den Abflusskanal 63 im Hauptstufenventilkörper 35 in Richtung der zusätzlichen druckbeaufschlagten Fläche A_{SchließD2} abfließen kann. Dadurch kann das Hauptstufenventil nicht unkontrolliert schnell öffnen, sondern nur unter Überwindung der Dämpfkraft des Dämpfventils 81. Bei einer Bewegungsumkehr der Kolbenstange sinkt der Öffnungsdruck auf den Hauptstufenventilkörper 35 und eine Schließfeder 119 bewegt den Hauptstufenventilkörper bei geöffnetem Rückschlagventil 79 wieder schnell in die Schließposition zurück.

Der dritte Betriebszustand bezieht sich auf eine Anströmung der Dämpfventileinrichtung 1 ausgehend vom kolbenstangenseitigen Arbeitsraum 9 und geöffnetem Notbetriebventil 67. Das Dämpfmedium gelangt durch die Anschlussöffnung 75 in der Verbindungshülse 66 zur druckbeaufschlagten Fläche A_{ÖZ} am radialen Absatz 43 und weiter zur nun funktional eine Schließfläche A_{SchließZ} bildende druckbeaufschlagten Fläche. Die druckbeaufschlagte Fläche am radialen Absatz des Hauptstufenventilkörpers ist für beide Anströmrichtungen der Dämpfventileinrichtung wirksam. In Abhängigkeit der Energieversorgung des Aktuators 15 stellt sich eine Vorventilposition ein, über die wiederum ein Steuerdruck im Steuerraum 57 und damit auch an der druckbeaufschlagten Fläche A_{SchließZ} ansteuerbar ist. Der auf eine ringförmige Fläche A_{ÖZ} wirksame Druck wirkt dem in Schließrichtung wirksamen Druck auf die Fläche A_{SchließZ} entgegen. Wegen der Ablaufdrossel 86, die nun als Zulaufdrossel fungiert, liegt bei ausreichend weit geöffneten Vorstufenventil 23 ein Druckgefälle zwischen den Drücken an den Flächen A_{ÖZ} und A_{SchließZ} vor, so dass die hydraulische Öffnungskraft ab einem bestimmten Druckgefälle am Hauptstufenventilkörper 35 stets etwas größer ist als die hydraulische Schließkraft. Der Druck in der Anschlussöffnung 75 wirkt auch auf den Ventilring 47, der damit auf die gehäuseseitige Ventilsitzfläche 49 gedrückt wird. Deshalb hebt der Hauptstufenventilkörper 35 von der Ventilsitzfläche 45 des Ventilrings 47 ab. Das Dämpfventil 81 verhindert mit seiner Rückschlagventilfunktion einen hydraulischen Kurzschluss des Vorstufenventils 23. Die Funktion des Federhalters 85 ist identisch mit dem zum ersten Betriebszustand beschriebenen.

Das aus dem Steuerraum 57 durch das Vorstufenventil 23 abfließende Dämpfmedium gelangt in den Rückraum 59 und durch das geöffnete Notbetriebventil 67 und die Strömungsverbindung 65 in der Verbindungshülse 66 in den kolbenstangenfernen Arbeitsraum 11. Folglich weist der Rückraum 59 einen Zulauf und Ablauf mit dem Arbeitsraum 11 des Schwingungsdämpfers auf.

Beim vierten Betriebszustand erfolgt die Zuströmung wiederum über die Anschlussöffnung 75 in der Verbindungshülse 66, jedoch ist das Notbetriebventil 67 wegen fehlender Stromversorgung geschlossen. Der Strömungsweg zum Vorstufenventil 23 entspricht dem Beschriebenen zum dritten Betriebszustand. Abweichend ist das Vorstufenventil 23 aufgrund der Vorstufenventilsitzfeder 30 geschlossen. Die Schließfeder 119 sorgt für ein Aufsitzen des Hauptstufenventilkörpers 35 zusammen mit dem Ventilring 47 auf der gehäuseseitigen Ventilsitzfläche 49. Damit wird ein hydraulischer Kurzschluss zwischen den Arbeitsräumen über die Anschlussöffnung 75 verhindert. Das Dämpfmedium gelangt in den Rückraum 59, dessen Abfluss über das geschlossene Notbetriebventil 67 blockiert ist. Das Dämpfventil 81 bleibt ebenfalls geschlossen. In dem Ventilring 69 des Notbetriebsventils 67 ist ein Strömungspfad 121 zu einem Druckbegrenzungsventil 123 ausgeführt, über das ein definiertes Druckniveau im Rückraum 59 bestimmt werden kann. Das Druckniveau im Rückraum 59 und damit auf die Rückseite 41 des Hauptstufenventilkörpers 35 und auf die druckbeaufschlagte Fläche am radialen Absatz A_{SchließZ} bestimmt die Schließkraft im Notbetrieb der Dämpfventileinrichtung 1. Der Vergleich des zweiten mit dem vierten Betriebszustand verdeutlicht, dass das Notbetriebventil 67 nur bei einer Anströmungsrichtung der Dämpfventileinrichtung 1 über die Anschlussöffnung 75 wirksam ist. Versuche haben gezeigt, dass diese Auslegung der Dämpfventileinrichtung 1 für ein sicheres Betriebsverhalten eines Schwingungsdämpfers geeignet ist.

**Bezugszeichen**

| | |
|---|---|
| 1 | Dämpfventileinrichtung |
| 3 | Kolbenstange |
| 5 | Kolben |
| 7 | Zylinder |
| 9 | kolbenstangenseitiger Arbeitsraum |
| 11 | kolbenstangenferner Arbeitsraum |
| 13 | äußeres Gehäuse |
| 15 | Aktuator |
| 17 | Magnetspule |
| 19 | Anker |
| 21 | Vorstufenventilkörper |
| 23 | Vorventil |
| 25, 27 | Ventilfeder |
| 29 | Vorstufenventilfläche |
| 30 | Vorstufenventilschließfeder |
| 31 | inneres Gehäuse |
| 32 | Vorstufenventilsitzkörper |
| 33 | Stufenöffnung |
| 35 | Hauptstufenventilkörper |
| 37 | Hauptstufenventil |
| 39 | Führungshülse |
| 41 | Rückseite |
| 43 | radialer Absatz |
| 45 | Ventilsitzfläche |
| 47 | Ventilring |
| 49 | gehäuseseitige Ventilsitzfläche |
| 51 | äußerer Topf |
| 53 | innere Scheibe |
| 55 | Strömungsabschnitt |
| 57 | Steuerraum |
| 59 | Rückraum |
| 61 | Zuströmkanal |
| 63 | Abflusskanal |
| 65 | Strömungsanbindung |
| 66 | Verbindungshülse |
| 67 | Notbetriebsventil |
| 69 | Ventilring |
| 71 | Schließfeder |
| 73 | Notbetriebsventilsitzfläche |
| 75 | Anschlussöffnung |
| 77 | axiale Öffnung |
| 79 | Rückschlagventil |
| 81 | Dämpfventil |
| 83 | Schaftabschnitt |
| 85 | Federhalter |
| 86 | Ablaufdrossel |
| 87 | Federelement |
| 89 | Führungszapfen |
| 91 | Führungsfläche |
| 93 | Befestigungsflansch |
| 95 | radiale Wandung |
| 97 | Freiraum |
| 99 | Stützfläche |
| 101 | Verschlussbereich |
| 103 | Scheibenkörper |
| 105 | konischer Übergang |
| 107 | Spannbolzen |
| 109 | Ventilscheibe |
| 111 | Bund |
| 113 | Rückschlagventilfeder |
| 115 | Vorspannfeder |
| 117 | Durchgangsöffnung |
| 119 | Schließfeder |
| 121 | Strömungspfad |
| 123 | Druckbegrenzungsventil |

## Patentansprüche

1. Verstellbare Dämpfventileinrichtung (1) für einen Schwingungsdämpfer, umfassend einen Aktuator (15), der auf einen mehrteiligen Vorstufenventilkörper (21) eines Vorstufenventils (23) eine Betätigungskraft ausübt, wobei das Vorstufenventil (23) über einen relativ zu einem aktuatorseitigen Schaftabschnitt (83) auf einen axial beweglichen Vorstufenventilschließkörper (32) eine Schließkraft auf ein Hauptstufenventil (37) beeinflusst, indem es das Druckniveau in einem Steuerraum (57) der Dämpfventileinrichtung (1) bestimmt, wobei ein Hauptstufenventilkörper (35) des Hauptstufenventils (37) bei einer Abhubbewegung einen Rückraum (59) komprimiert, der über das Vorstufenventil (23) mit dem Steuerraum (57) verbunden ist, **dadurch gekennzeichnet, dass** eine Vorstufenventilschließfeder (30) den Vorstufenventilsitzkörper (32) unabhängig von der Aktuatoransteuerung in Schließrichtung beaufschlägt, und der Rückraum (59) einen Abflusskanal (63) aufweist, der ein Dämpfventil (81) aufweist, das bei einer Abhubbewegung des Hauptstufenventilkörpers (35) und abgeschlossenem Rückraum (59) eine Dämpfkraft erzeugt.

2. Dämpfventileinrichtung nach Anspruch 1, **dadurch gekennzeichnet, dass** der Abflusskanal (63) im Hauptstufenventil ausgeführt ist.

3. Dämpfventileinrichtung nach Anspruch 1, **dadurch gekennzeichnet, dass** das Vorstufenventil (23) für zwei getrennte Anströmflächen (A_{SchließD,} A_{SchließD2}) des Hauptstufenventil (37) zwei getrennte Strömungsverbindungsabschnitte (55; 61; 77) zum Steuerraum (57) aufweist, wobei ein Rückschlagventil (79) den Dämpfmediumeintritt von den Strömungsverbindungsabschnitten (55; 61; 77) in den Steuerraum (57) steuert.

4. Dämpfventileinrichtung nach Anspruch 3, **dadurch gekennzeichnet, dass** die Strömungsverbindungsabschnitte (55; 61; 77) im Hauptstufenventilkörper (35) ausgeführt sind.

5. Dämpfventileinrichtung nach Anspruch 1, **dadurch gekennzeichnet, dass** der Hauptstufenventilkörper (35) mehrteilig ausgeführt ist und in einer Teilungsfuge ein Strömungsabschnitt (55) zwischen dem Hauptstufenventil (37) und dem Vorstufenventil (23) ausgeführt ist.

6. Dämpfventileinrichtung nach Anspruch 1, **dadurch gekennzeichnet, dass** ein Spannbolzen (107) des Hauptstufenventilkörpers (35) mindestens eine Ventilscheibe (109) des Dämpfventils (81) zumindest mittelbar in Schließrichtung vorspannt.

7. Dämpfventileinrichtung nach Anspruch 7, **dadurch gekennzeichnet, dass** der Spannbolzen (107) als ein zum Hauptstufenventilköper (35) separates Bauteil ausgeführt ist.

8. Dämpfventileinrichtung nach Anspruch 7, **dadurch gekennzeichnet, dass** die mindestens eine Ventilscheibe (109) des Dämpfventils (81) elastisch ausgeführt ist.

9. Dämpfventileinrichtung nach Anspruch 1, **dadurch gekennzeichnet, dass** sich die Vorstufenventilschließfeder (30) an einem Ventilkörper (69) eines Notbetriebsventils (67) abstützt.

10. Dämpfventileinrichtung nach Anspruch 1, **dadurch gekennzeichnet, dass** die Vorstufenventilschließfeder (30) räumlich zwischen dem Schaftabschnitt (83) und dem Vorstufenventilsitzkörper (32) angeordnet ist.
